# EUROPEAN PATENT APPLICATION

(11) **EP 4 468 432 A1**
(43) Date of publication of application: **27.11.2024**
(21) Application number: 24165882.2
(22) Date of filing: 25.03.2024
(51) Int. Cl.: H01M 10/04, H01M 10/0583, H01M 50/103, H01M 50/176, H01M 50/183, H01M 50/54, H01M 50/553, H01M 50/583

(54) **SECONDARY BATTERY**

(30) Priority: 24.05.2023 JP 2023085299
(71) Applicant: TOYOTA JIDOSHA KABUSHIKI KAISHA, Aichi-ken 471-8571 (JP)
(72) Inventor: ISHIZUKA, Masahiro, Toyota-shi, 471-8571 (JP); SUZUKI, Kosuke, Toyota-shi, 471-8571 (JP); MORI, Hideto, Toyota-shi, 471-8571 (JP); TATEISHI, Mitsuru, Toyota-shi, 471-8571 (JP); ISHIKAWA, Shinya, Toyota-shi, 471-8571 (JP); TARUTANI, Mari, Toyota-shi, 471-8571 (JP); KIMURA, Kenta, Toyota-shi, 471-8571 (JP)
(74) Representative: J A Kemp LLP

(57) **Abstract**

A secondary battery (10) includes: an electrode assembly (100) including a stack of a plurality of positive electrodes and a plurality of negative electrodes with a separator in between, each of the plurality of positive electrodes including a positive-electrode current collecting foil, each of the plurality of negative electrodes including a negative-electrode current collecting foil; and an exterior package that accommodates part of the electrode assembly (100). The electrode assembly (100) includes a positive-electrode current collecting bundle (310) including a bundle of respective parts of a plurality of the positive-electrode current collecting foils, and a negative-electrode current collecting bundle (320) including a bundle of respective parts of a plurality of the negative-electrode current collecting foils, and part of at least one collecting bundle of the positive-electrode current collecting bundle (310) and the negative-electrode current collecting bundle (320) extends to outside of the exterior package.

## Description

### CROSS REFERENCE TO RELATED APPLICATIONS

This nonprovisional application is based on Japanese Patent Application No. 2023-085299 filed on May 24, 2023 with the Japan Patent Office, the entire contents of which are hereby incorporated by reference.

### BACKGROUND

### Field

The present disclosure relates to a secondary battery.

### Description of the Background Art

Japanese Patent Laying-Open No. 2022-123686 discloses, as a conventional secondary battery, a technique of accommodating an electrode stack formed by stacking sheet-shaped electrode elements in a hollow-shaped laminated-film outer casing, and sealing the stack electrode with an inner lid disposed at an opening part of the laminated-film exterior package. The inner lid has an opening portion, and an electrode terminal joined to a current collector of the electrode stack is extended to outside of the laminated-film package from the opening portion.

### SUMMARY

The secondary battery disclosed in Japanese Patent Laying-Open No. 2022-123686 is configured to connect the current collector to the electrode terminal, and accordingly, an increase in the number of components and thus an increase in manufacturing cost are feared.

The present disclosure has been made in view of the above problem. An object of the present disclosure is to provide a secondary battery that can be manufactured with a reduced number of components and at a reduced manufacturing cost.

A secondary battery according to the present disclosure includes: an electrode assembly including a stack of a plurality of positive electrodes and a plurality of negative electrodes with a separator in between, each of the plurality of positive electrodes including a positive-electrode current collecting foil, each of the plurality of negative electrodes including a negative-electrode current collecting foil; and an exterior package that accommodates part of the electrode assembly. The electrode assembly includes a positive-electrode current collecting bundle including a bundle of respective parts of a plurality of the positive-electrode current collecting foils, and a negative-electrode current collecting bundle including a bundle of respective parts of a plurality of the negative-electrode current collecting foils. Part of at least one collecting bundle of the positive-electrode current collecting bundle and the negative-electrode current collecting bundle extends to outside of the exterior package.

With the configuration above, part of at least one current collecting bundle of the positive-electrode current collecting bundle and the negative-electrode current collecting bundle directly extends outwardly from the exterior package. This eliminates the need for connecting an external terminal to the portion of the at least one current collecting bundle which is extended from the exterior package. As a result, compared with the configuration in which an external terminal is connected to each of the positive-electrode current collecting bundle and the negative-electrode current collecting bundle, the number of components and thus a manufacturing cost can be reduced.

In the secondary battery according to the present disclosure, the exterior package may have a through hole. The part of the at least one current collecting bundle may extend to outside of the exterior package from the through hole.

With the configuration above, at least one current collecting bundle can be easily extended to outside of the exterior package through the through hole.

In the secondary battery according to the present disclosure, a wall surface of the exterior package includes a portion that gradually decreases in peripheral length from an inner surface side of the exterior package to an outer surface side of the exterior package, the wall surface defining the through hole.

With the above configuration, in insertion of the current collecting bundle into the through hole, the tip of the current collecting bundle can be guided by the wall surface, thus allowing the current collecting bundle to be easily guided into the through hole.

The secondary battery according to the present disclosure may further include a sealing member sealing a gap between the through hole and a portion of the at least one current collecting bundle, the portion being inserted into the through hole.

With the configuration above, an electrolyte solution or the like can be prevent from leaking from the gap between the through hole and the portion of the at least one current collecting bundle which is inserted into the through hole, leading to improved reliability of the secondary battery.

In the secondary battery according to the present disclosure, the sealing member may have insulation properties.

With the configuration above, the current collecting bundle extended to outside of the exterior package and the exterior package can be prevented from becoming electrically conductive.

In the secondary battery according to the present disclosure, a portion of the at least one current collecting bundle located outside of the exterior package may have a cutout or a hole portion.

With the configuration above, when a large current flows through the secondary battery, the cutout or the hole portion can function as a fuse to melt the extended portion. Also, the cutout or the hole portion is provided outside of the exterior package, thus preventing intrusion of an arc, generated in melting of the portion of the current collecting bundle located outside of the exterior package, into the exterior package. This can increase the safety in melting of the current collecting bundle.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a secondary battery according to Embodiment 1.
Fig. 2 is a sectional view taken along the line II-II shown in Fig. 1.
Fig. 3 is a sectional view taken along the line III-III shown in Fig. 1.
Fig. 4 is a sectional view taken along the line IV-IV shown in Fig. 2.
Fig. 5 is a sectional view of a secondary battery according to Embodiment 2, which corresponds to Fig. 2.
Fig. 6 is a sectional view of a secondary battery according to Embodiment 3, which corresponds to Fig. 2.
Fig. 7 is a sectional view of a secondary battery according to Embodiment 4, which corresponds to Fig. 2.

### DESCRIPTION OF THE PREFERRED EMBODIMENTS

Embodiments of the present disclosure will be described below in detail with reference to the drawings. In the following description of the embodiments, the same or corresponding portions in the drawings are denoted by the same reference characters, and description thereof will not be repeated.

### Embodiment 1

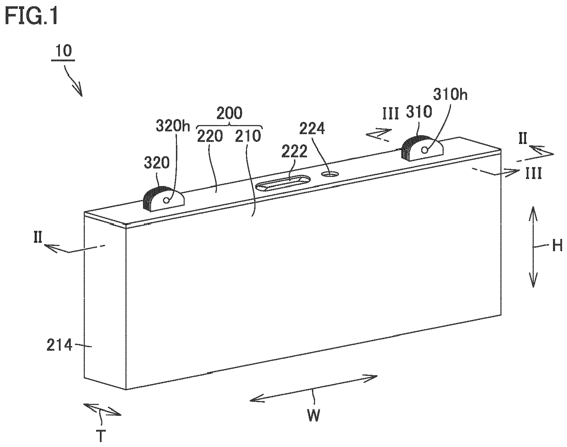

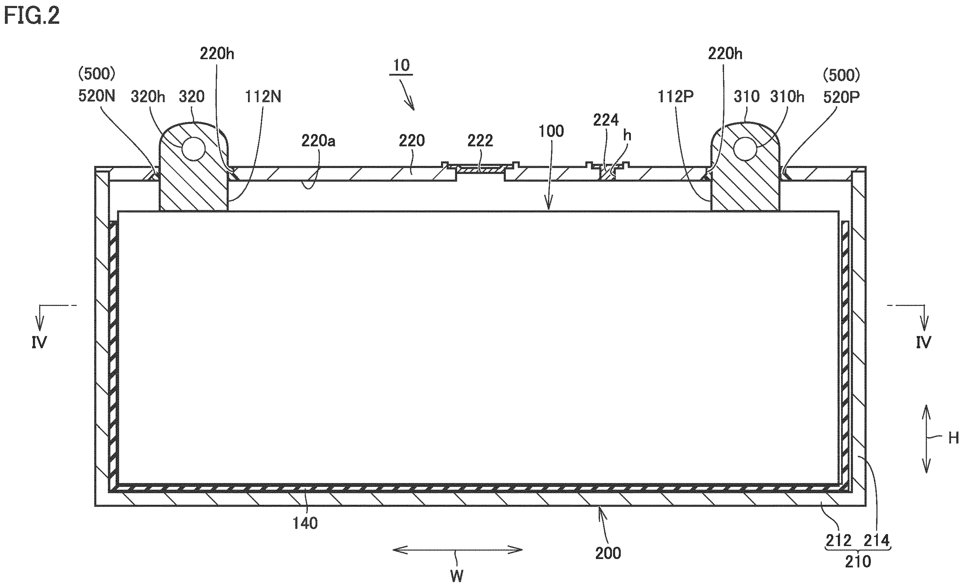

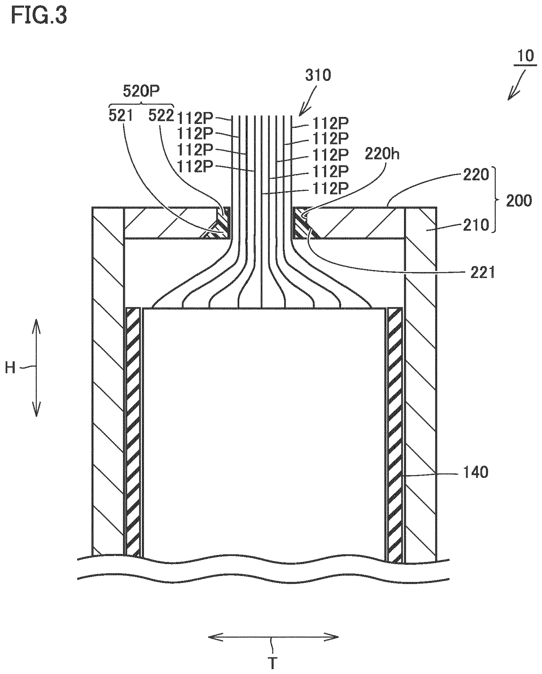

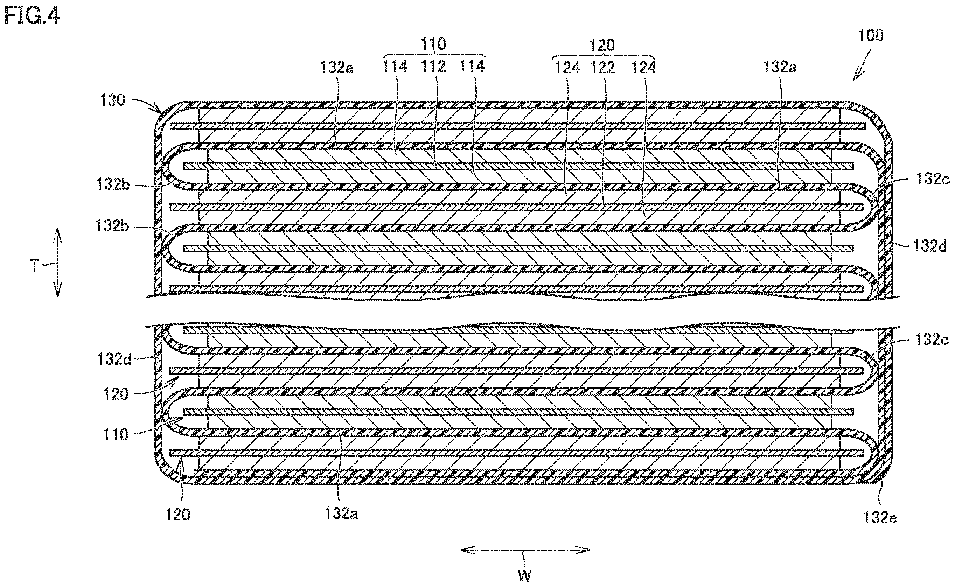

Fig. 1 is a perspective view of a secondary battery according to Embodiment 1. Fig. 2 is a sectional view taken along the line II-II shown in Fig. 1. Fig. 3 is a sectional view taken along the line III-III shown in Fig. 1. Fig. 4 is a sectional view take along the line IV-IV shown in Fig. 2. Referring to Figs. 1 to 4, a secondary battery 10 according to Embodiment 1 will be described.

As shown in Figs. 1 and 2, secondary battery 10 according to Embodiment 1 includes an electrode assembly 100, an accommodation case 200 as an exterior package, and a sealing member 500. Electrode assembly 100 includes a positive-electrode current collecting bundle 310 and a negative-electrode current collecting bundle 320, which will be described later. In the present embodiment, the tip sides of positive-electrode current collecting bundle 310 and negative-electrode current collecting bundle 320 extend outwardly from accommodation case 200.

Accommodation case 200 accommodates part of electrode assembly 100. More particularly, accommodation case 200 accommodates electrode assembly 100 except for portions of positive-electrode current collecting bundle 310 and negative-electrode current collecting bundle 320 which are extended outwardly from accommodation case 200. Accommodation case 200 accommodates an electrolyte solution (not shown). Accommodation case 200 is hermitically sealed. Accommodation case 200 includes a case body 210 and a lid body 220.

Case body 210 has an opening that is open to a first side in a height direction H (vertical direction), that is, upwardly. Case body 210 is made of a metal such as aluminum. Case body 210 includes a bottom wall 212 and a peripheral wall portion 214. Bottom wall 212 is formed in a rectangular, flat plate shape. Peripheral wall portion 214 rises from bottom wall 212. Peripheral wall portion 214 is formed in a quadrangular tube shape. The length of peripheral wall portion 214 in a width direction W is larger than the length of peripheral wall portion 214 in a thickness direction T. The length of peripheral wall portion 214 in height direction H is larger than the length of peripheral wall portion 214 in thickness direction T.

Lid body 220 closes the opening of case body 210. Lid body 220 is connected to the opening by welding or the like. Lid body 220 is formed in a flat plate shape. Lid body 220 is made of a metal such as aluminum. Lid body 220 includes a pressure release valve 222 and a sealing member 224. Lid body 220 also has two through holes 220h. Two through holes 220h are spaced apart from each other in width direction W. Two through holes 220h are provided at positions corresponding to a positive electrode tab 112P and a negative electrode tab 112N, respectively, which will be described later.

Pressure release valve 222 is formed at the central portion of lid body 220. Pressure release valve 222 is formed to rupture as the internal pressure of accommodation case 200 becomes equal to or more than a predetermined pressure. Gas in accommodation case 200 is released out of accommodation case 200 through pressure release valve 222 as pressure release valve 222 ruptures, resulting in a decreased internal pressure of accommodation case 200.

Sealing member 224 seals a liquid inlet h formed in lid body 220. In the process of manufacturing secondary battery 10, the electrolyte solution is injected into accommodation case 200 through liquid inlet h. Liquid inlet h is sealed with sealing member 224 after injection of the electrolyte solution into case body 210.

As shown in Fig. 3, positive-electrode current collecting bundle 310 is a bundle of a plurality of positive electrode tabs 112P, each of which is part of positive-electrode current collecting foil 112 (see Fig. 4), which will be described later. The tip side of positive-electrode current collecting bundle 310 is extended to outside of accommodation case 200. Positive-electrode current collecting bundle 310 extends to outside of accommodation case 200 from through hole 220h (referred to as a first-side through hole) positioned on a first side in width direction W of two through holes 220h provided in lid body 220. Specifically, positive-electrode current collecting bundle 310 extends above accommodation case 200 (more particularly, lid body 220). A portion of positive-electrode current collecting bundle 310 which extends outwardly from accommodation case 200 functions as a positive electrode terminal.

Positive-electrode current collecting bundle 310 has a hole portion 3 10h. More particularly, hole portion 310h is provided in a portion of positive-electrode current collecting bundle 310 which is positioned outside of accommodation case 200. Hole portion 3 10h passes through positive-electrode current collecting bundle 310 in thickness direction T. Hole portion 310h functions as a fuse. When a large current flows through secondary battery 10, an electric resistance increases around hole portion 310h, thus melting positive-electrode current collecting bundle 310 by heat. Moreover, hole portion 310h is provided outside of accommodation case 200, and thus, can prevent intrusion of an arc generated in melting of positive-electrode current collecting bundle 310 into accommodation case 200. This can increase the safety in melting of positive-electrode current collecting bundle 310. The respective wall surfaces of positive electrode tabs 112P defining hole portion 310h are fixed to each other by deposition or the like.

Similarly, negative-electrode current collecting bundle 320 is a bundle of negative electrode tabs 112N, each of which is part of negative-electrode current collecting foil 122 (see Fig. 4), which will be described later. The tip side of negative-electrode current collecting bundle 320 is extended to outside of accommodation case 200. Negative-electrode current collecting bundle 320 extends to outside of accommodation case 200 from through hole 220h (referred to as a second-side through hole) positioned on a second side in width direction W of two through holes 220h provided in lid body 220. Specifically, negative-electrode current collecting bundle 320 extends above accommodation case 200 (more particularly, lid body 220). A portion of negative-electrode current collecting bundle 320 which extends outwardly from accommodation case 200 functions as a negative electrode terminal.

Negative-electrode current collecting bundle 320 may also have a hole portion 320h. Hole portion 320h functions as a fuse similarly to hole portion 310h. Accordingly, also on the negative-electrode current collecting bundle 320 side, effects similar to those on the positive-electrode current collecting bundle 310 side are achieved.

Sealing member 500 includes a positive-electrode-side sealing member (first sealing member) 520P and a negative-electrode-side sealing member (second sealing member) 520N.

Positive-electrode-side sealing member 520P seals a gap between the first-side through hole and a portion of positive-electrode current collecting bundle 310 which is inserted into the first-side through hole. Positive-electrode-side sealing member 520P has insulation properties.

Herein, the wall surface of lid body 220 which defines through hole 220h includes an induction portion 221. Induction portion 221 is provided such that the wall surface gradually decreases in peripheral length from the inner surface side of lid body 220 to the outer surface side of this lid body. Specifically, induction portion 221 is inclined inwardly in thickness direction T upward from below. Such an induction portion 221 can allow the tip sides of positive electrode tabs 112P and the tip sides of negative electrode tabs 112N to be easily guided into through hole 220h when positive-electrode current collecting bundle 310 or negative-electrode current collecting bundle 320 is inserted into through hole 220h.

Positive-electrode-side sealing member 520P includes a first portion 521 and a second portion 522. First portion 521 is a portion that fills the gap between induction portion 221 and positive-electrode current collecting bundle 310. Second portion 522 is a portion that fills the gap between through hole 220h and positive-electrode current collecting bundle 310 on the side close to the outer surface of lid body 220 relative to first portion 521.

Negative-electrode-side sealing member 520N seals the gap between the second-side through hole and a portion of negative-electrode current collecting bundle 320 which is inserted into the second-side through hole. Negative-electrode-side sealing member 520N has insulation properties. Negative-electrode-side sealing member 520N also includes a first portion and a second portion, similarly to positive-electrode-side sealing member 520P.

Since positive-electrode-side sealing member 520P and negative-electrode-side sealing member 520N are provided, an electrolyte solution or the like can be prevented from leaking from the gaps between two through holes 220h and the portions of positive-electrode current collecting bundle 310 and negative-electrode current collecting bundle 320 which are inserted into the two through holes 220h, leading to improved reliability of secondary battery 10.

Although the case where positive-electrode current collecting bundle 310 and negative-electrode current collecting bundle 320 project upwardly from accommodation case 200 has been described by way of example, the portions of positive-electrode current collecting bundle 310 and negative-electrode current collecting bundle 320 which are positioned outside of accommodation case 200 may be bent so as to be approximately parallel to the outer surface of lid body 220. In the case of bending, secondary battery 10 can be reduced in height. Positive-electrode current collecting bundle 310 and negative-electrode current collecting bundle 320 may be bent in the same direction or in different directions. For example, positive-electrode current collecting bundle 310 and negative-electrode current collecting bundle 320 may be bent in the same direction such that their tips are oriented to a first side or a second side in thickness direction T. Alternatively, positive-electrode current collecting bundle 310 may be bent such that the tip thereof is oriented to the first side in thickness direction T, and negative-electrode current collecting bundle 320 may be bent such that the tip thereof is oriented to the second side in thickness direction T.

As shown in Fig. 4, electrode assembly 100 includes a plurality of positive electrodes 110, a plurality of negative electrodes 120, and a separator 130.

Positive electrodes 110 and negative electrodes 120 are disposed side by side in thickness direction T. Positive electrodes 110 and negative electrodes 120 are alternately stacked in thickness direction T with separator 130 in between.

Positive electrode 110 is formed in a rectangular shape that is longer in width direction W. Positive electrode 110 includes a positive-electrode current collecting foil 112 and positive-electrode active material layers 114 provided on the opposite surfaces of positive-electrode current collecting foil 112. Positive-electrode current collecting foil 112 includes positive electrode tab 112P as a part thereof. Positive electrode tab 112P projects to the first side in height direction H from the first-side end (upper end) in height direction H of positive electrode 110. Positive electrode tab 112P is located on the first side in width direction W at the upper end described above. Positive-electrode active material layer 114 is not provided on positive electrode tab 112P.

Negative electrode 120 is formed in a rectangular shape that is longer in width direction W. Negative electrode 120 includes a negative-electrode current collecting foil 122 and negative-electrode active material layers 124 provided on the opposite surfaces of negative-electrode current collecting foil 122. Negative-electrode current collecting foil 122 includes negative electrode tab 112N as a part thereof. Negative electrode tab 112N projects to the first side in height direction H from the first-side end (upper end) in height direction H of negative electrode 120. Negative electrode tab 112N is located on the first side in width direction W at the upper end described above. Negative-electrode active material layer 124 is not provided on negative electrode tab 112N.

Separator 130 insulates positive electrode 110 from negative electrode 120. Separator 130 is made of an insulating material and has minute air gaps that allow ions to pass therethrough. Separator 130 is formed in a zigzag manner.

Separator 130 takes on a rectangular shape before being formed in a zigzag manner. Separator 130 is disposed while being formed in a zigzag manner between positive electrode 110 and negative electrode 120. Separator 130 includes a plurality of intervening portions 132a, a plurality of first folded portions 132b, a plurality of second folded portions 132c, and an outermost covering portion 132d.

Each intervening portion 132a is provided between positive electrode 110 and negative electrode 120 adjacent to each other in thickness direction T. Each intervening portion 132a has a function to insulate positive electrode 110 from negative electrode 120. Each intervening portion 132a is formed in a rectangular region.

First folded portion 132b couples the first-side ends in width direction W of intervening portions 132a adjacent to each other in thickness direction T so as to sandwich positive electrode 110 therebetween. First folded portion 132b is disposed on the first side in width direction W of positive electrode 110.

Second folded portion 132c couples the second-side ends in width direction W of intervening portions 132a adjacent to each other in thickness direction T so as to sandwich negative electrode 120 therebetween. Second folded portion 132c is disposed on the second side in width direction W of negative electrode 120.

Outermost covering portion 132d covers first folded portions 132b and second folded portions 132c together. More specifically, outermost covering portion 132d covers all positive electrodes 110, all negative electrodes 120, all intervening portions 132a, all first folded portions 132b, and all second folded portions 132c together while winding about the axis of winding parallel to height direction H. A terminal end 132e of outermost covering portion 132d is set so as not to overlap with positive-electrode active material layer 114 and negative-electrode active material layer 124 in thickness direction T.

When separator 130 is disposed as described above, outermost covering portion 132d has a tube shape that is open to the first side (upper side) and the second side (lower side) in height direction H. Consequently, the electrolyte solution injected through liquid inlet h into accommodation case 200 can be directly guided to electrode assembly 100 through the upper-side opening of separator 130. This facilitates impregnation of electrode assembly 100 with the electrolyte solution.

The peripheral surface of outermost covering portion 132d of separator 130, and the bottoms of positive electrodes 110, negative electrodes 120, and separators 130 located on the second side (lower side) in the height direction are covered with an insulating film 140.

As described above, in secondary battery 10 according to Embodiment 1, part of each of positive-electrode current collecting bundle 310 and negative-electrode current collecting bundle 320 is provided to extend directly from accommodation case 200. Accordingly, the portions of positive-electrode current collecting bundle 310 and negative-electrode current collecting bundle 320 which are extended from accommodation case 200 can function as a positive electrode terminal and a negative electrode terminal, respectively. This eliminates the need for connecting an external terminal that is a separate member to positive-electrode current collecting bundle 310 and negative-electrode current collecting bundle 320. As a result, the present embodiment can reduce the number of components and thus the manufacturing cost compared with the case where the positive electrode terminal is connected to positive electrode tabs 112P (positive-electrode current collecting bundle 310) and the negative electrode terminal is connected to negative electrode tabs 112N (negative-electrode current collecting bundle 320).

### Embodiment 2

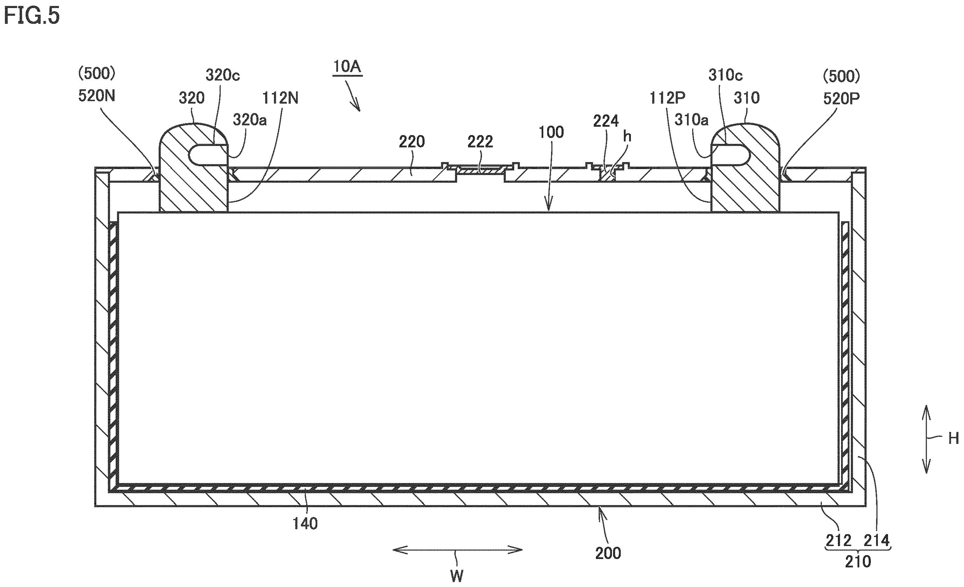

Fig. 5 is a sectional view of a secondary battery according to Embodiment 2, which corresponds to Fig. 2. A secondary battery 10A according to Embodiment 2 will be described with reference to Fig. 5.

As shown in Fig. 5, secondary battery 10A according to Embodiment 2 is different from secondary battery 10 according to Embodiment 1 in that cutouts 310c, 320c are provided in place of hole portions 310h, 320h. The other configuration is substantially similar.

End surfaces 310a of positive electrode tabs 112P (positive-electrode current collecting bundle 310) defining cutout 310c are fixed to each other by deposition or the like. Similarly, end surfaces 320a of negative electrode tabs 112N (negative-electrode current collecting bundle 320) defining cutout 320c are fixed to each other by deposition or the like.

Also in the case of the configuration above, secondary battery 10A according to Embodiment 2 can achieve substantially similar effects to those of secondary battery 10 according to Embodiment 1.

### Embodiment 3

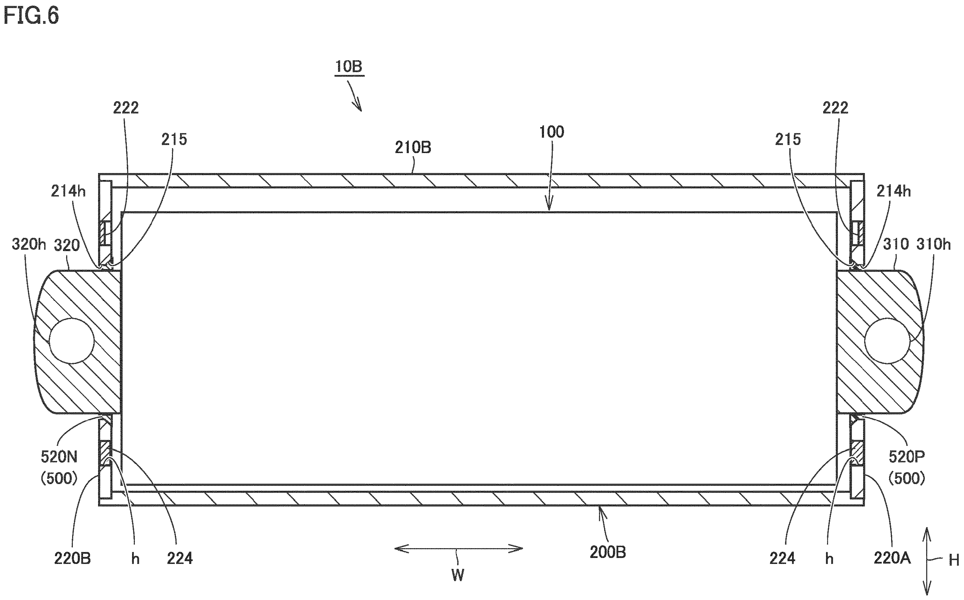

Fig. 6 is a sectional view of a secondary battery according to Embodiment 3, which corresponds to Fig. 2. A secondary battery 10B according to Embodiment 3 will be described with reference to Fig. 6.

As shown in Fig. 6, secondary battery 10B according to Embodiment 3 is different from secondary battery 10 according to Embodiment 1 in the configurations of electrode assembly 100 and accommodation case 200B. The other configuration is substantially similar.

Accommodation case 200B includes a case body 210B and a pair of lid bodies 220A, 220B. Case body 210B has a tube shape that is open on the opposite sides in width direction W. The pair of lid bodies 220A, 220B close openings provided on the opposite sides of case body 210B. Specifically, lid body 220A closes the opening of case body 210B which is located on the first side in width direction W. Lid body 220B closes the opening of case body 210B which is located on the second side in width direction W.

Pressure release valve 222 and liquid inlet h are provided in each of the pair of lid body 220A and lid body 220B. In each of the pair of lid body 220A and lid body 220B, for example, pressure release valve 222 is provided on the first side in height direction H, and liquid inlet h is provided on the second side in height direction H. The positions of pressure release valve 222 and liquid inlet h are not limited to the above ones, and may be provided at any positions in lid body 220A and lid body 220B. When pressure release valve 222 is disposed on the first side in height direction H, the electrolyte solution can be prevented from leaking out of accommodation case 200B when pressure release valve 222 is opened. Liquid inlet h is sealed with sealing member 224.

Although description has been given with regard to the case where pressure release valve 222 and liquid inlet h are provided in each of the pair of lid body 220A and lid body 220B, they may be provided in only one of the pair of lid body 220A and lid body 220B.

Each of the pair of lid bodies 220A, 220B has a through hole 214h. Through hole 214h has a shape substantially similar to that of through hole 220h. Each of the wall surfaces of lid bodies 220A, 220B which defines through hole 214h includes an induction portion 215 having a wall surface that gradually decreases in peripheral length from the inner surface side of each of lid bodies 220A, 220B to the outer surface side of this lid body.

Part of positive-electrode current collecting bundle 310 extends to outside of accommodation case 200 through through hole 214h provided in lid body 220A. Part of negative-electrode current collecting bundle 320 extends to outside of accommodation case 200 through through hole 214h provided in lid body 220B.

Electrode assembly 100 according to Embodiment 3 is different from that of Embodiment 1 in the positions of positive electrode tab 112P and negative electrode tab 112N and the configuration of separator 130.

Positive electrode tabs 112P project from the end of positive electrode 110 which is located on the first side in width direction W to the first side in width direction W. Consequently, the tip side of positive-electrode current collecting bundle 310 extends to outside of accommodation case 200 from lid body 220A of accommodation case 200B which is located on the first side in width direction W. Positive-electrode current collecting bundle 310 projects from lid body 220A to the first side in width direction W.

Negative electrode tabs 112N project from the end of negative electrode 120 which is located on the second side in width direction W to the second side in width direction W. Consequently, the tip side of negative-electrode current collecting bundle 320 extends to outside of accommodation case 200 from lid body 220B of accommodation case 200B which is located on the second side in width direction W. Negative-electrode current collecting bundle 320 projects from lid body 220B to the second side in width direction W.

In separator 130, first folded portion 132b couples the first-side ends (upper ends) in height direction H of intervening portions 132a adjacent to each other in thickness direction T so as to sandwich positive electrode 110 therebetween. First folded portion 132b is disposed on the first side (upper side) in height direction H of positive electrode 110.

Second folded portion 132c couples the second-side ends (lower ends) in height direction H of intervening portions 132a adjacent to each other in thickness direction T so as to sandwich negative electrode 120 therebetween. Second folded portion 132c is disposed on the second side (lower side) in height direction H of negative electrode 120.

Outermost covering portion 132d covers all positive electrodes 110, all negative electrodes 120, all intervening portions 132a, all first folded portions 132b, and all second folded portions 132c together while winding about the axis of winding parallel to width direction W.

Also in the case of the configuration as described above, secondary battery 10B according to Embodiment 3 can achieve substantially similar effects to those of secondary battery 10 according to Embodiment 1. Moreover, positive-electrode current collecting bundle 310 and negative-electrode current collecting bundle 320 extend in width direction W from accommodation case 200, thus leading to a low height compared with secondary battery 10 according to Embodiment 1.

### Embodiment 4

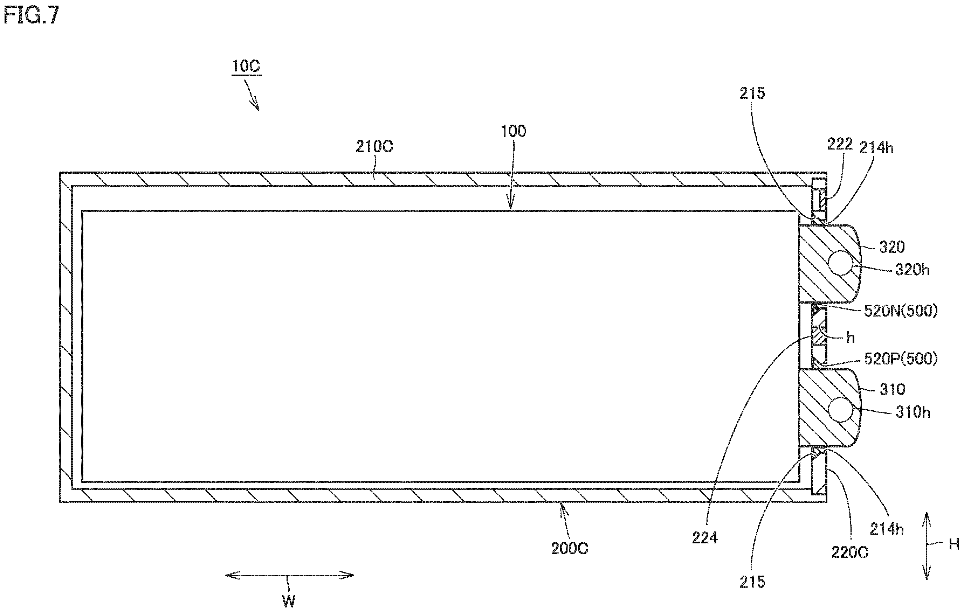

Fig. 7 is a sectional view of a secondary battery according to Embodiment 4, which corresponds to Fig. 2. A secondary battery 10C according to Embodiment 4 will be described with reference to Fig. 7.

As shown in Fig. 7, secondary battery 10C according to Embodiment 4 is different from secondary battery 10B according to Embodiment 3 mainly in the configuration of electrode assembly 100 and the configuration of accommodation case 200C. The other configuration is substantially similar.

Accommodation case 200C includes a case body 210C and a lid body 220C. Case body 210C has a tube shape that is open on the first side in width direction W. Lid body 220C closes an opening of case body 210C which is located on the first side in width direction W.

Pressure release valve 222 and liquid inlet h are provided in lid body 220C. In lid body 220C, for example, pressure release valve 222 is provided on the first side in height direction H, and liquid inlet h is located on the side close to the second side in height direction H relative to pressure release valve 222. More particularly, liquid inlet h is provided at the central portion of lid body 220C in height direction H. The positions of pressure release valve 222 and liquid inlet h are not particularly limited to the above ones and may be provided at any positions in lid body 220C. A plurality of liquid inlets h may be provided. When liquid inlets h are provided, the electrolyte solution can be injected into accommodation case 200C from a plurality of locations, thus increasing the rate of injection and the ability to impregnate electrode assembly 100 with the electrolyte solution. Liquid inlet h is sealed with sealing member 224.

Lid body 220C has two through holes 214h. Two through holes 214h are provided side by side in height direction H. The wall surface of lid body 220C which defines two through holes 214h has induction portions 215 described above.

Positive electrode tabs 112P and negative electrode tabs 112N are located on the first side in width direction W. Specifically, positive electrode tabs 112P project to the first side in width direction W from the end of positive electrode 110 which is located on the first side in width direction W. Negative electrode tabs 112N project to the second side in width direction W from the end of negative electrode 120 which is located on the second side in width direction W. Consequently, part of positive-electrode current collecting bundle 310 and part of negative-electrode current collecting bundle 320 project to the first side in width direction W from lid body 220C of accommodation case 200C which is located on the first side in width direction W.

Also in the case of the above configuration, secondary battery 10C according to Embodiment 4 can achieve substantially similar effects to those of secondary battery 10B according to Embodiment 3.

### (Other Modifications)

Embodiments 1 to 4 have described by way of an example the case where both positive-electrode current collecting bundle 310 and negative-electrode current collecting bundle 320 extend outwardly from accommodation case 200, but the present disclosure is not limited thereto. It suffices that a plurality of current collecting bundles of one of positive-electrode current collecting bundle 310 and negative-electrode current collecting bundle 320 extend from accommodation case 200. In this case, the other current collecting bundle of positive-electrode current collecting bundle 310 and negative-electrode current collecting bundle 320 may be connected to an external terminal with a coupling member in between.

Although the embodiments of the present disclosure have been described, it should be understood that the embodiments disclosed herein are illustrative and nonrestrictive in every respect. The scope of the present disclosure is defined by the terms of the claims and is intended to include any modifications within the scope and meaning equivalent to the terms of the claims.

## Claims

1. A secondary battery (10, 10A, 10B, 10C) comprising:
an electrode assembly (100) including a stack of a plurality of positive electrodes (110) and a plurality of negative electrodes (120) with a separator (130) in between, each of the plurality of positive electrodes (110) including a positive-electrode current collecting foil (112), each of the plurality of negative electrodes (120) including a negative-electrode current collecting foil (122); and
an exterior package that accommodates part of the electrode assembly (100), wherein
the electrode assembly includes
a positive-electrode current collecting bundle (310) including a bundle of respective parts of a plurality of the positive-electrode current collecting foils (112), and
a negative-electrode current collecting bundle (320) including a bundle of respective parts of a plurality of the negative-electrode current collecting foils, and
part of at least one current collecting bundle of the positive-electrode current collecting bundle (310) and the negative-electrode current collecting bundle (320) extends to outside of the exterior package.

2. The secondary battery (10, 10A, 10B, 10C) according to claim 1, wherein
the exterior package has a through hole (220h, 214h), and
the part of the at least one current collecting bundle extends to outside of the exterior package from the through hole (220h).

3. The secondary battery (10, 10A, 10B, 10C) according to claim 2, wherein a wall surface of the exterior package includes a portion that gradually decreases in peripheral length from an inner surface side of the exterior package to an outer surface side of the exterior package, the wall surface defining the through hole (220h).

4. The secondary battery (10, 10A, 10B, 10C) according to claim 2, further comprising a sealing member (500) sealing a gap between the through hole (220h, 214h) and a portion of the at least one current collecting bundle, the portion being inserted into the through hole (220h, 214h).

5. The secondary battery (10, 10A, 10B, 10C) according to claim 4, wherein the sealing member (500) has insulation properties.

6. The secondary battery (10, 10A, 10B, 10C) according to any one of claims 1 to 5, wherein a portion of the at least one current collecting bundle located outside of the exterior package has a cutout (310c) or a hole portion (310h).
